(19) Europäisches Patentamt
European Patent Office
Office européen des brevets

(11) Publication number: **0 248 483 B1**

(12) # EUROPEAN PATENT SPECIFICATION

(45) Date of publication of patent specification: **16.01.91**

(51) Int. Cl.$^5$: **C 08 G 67/02**

(21) Application number: **87201001.2**

(22) Date of filing: **26.05.87**

(54) **Process for the preparation of polymers.**

(30) Priority: **27.05.86 NL 8601348**

(43) Date of publication of application:
**09.12.87 Bulletin 87/50**

(45) Publication of the grant of the patent:
**16.01.91 Bulletin 91/03**

(84) Designated Contracting States:
**AT BE CH DE ES FR GB IT LI NL SE**

(56) References cited:
**EP-A-0 121 965**
**EP-A-0 181 014**
**US-A-4 076 911**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Doyle, Michael John**
**Badhuisweg 3**
**NL-1031 CM Amsterdam (NL)**
Inventor: **Van Ravenswaay-Claasen, Johan Christiaan**
**Badhuisweg 3**
**NL-1031 CM Amsterdam (NL)**
Inventor: **Rosenbrand, Gerrit Gerardus**
**Badhuisweg 3**
**NL-1031 CM Amsterdam (NL)**
Inventor: **Wife, Richard Lewin**
**Badhuisweg 3**
**NL-1031 CM Amsterdam (NL)**

(74) Representative: **Aalbers, Onno et al**
**P.O. Box 302**
**NL-2501 CH The Hague (NL)**

**EP 0 248 483 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a process for the preparation of polymers of carbon monoxide with one or more olefinically unsaturated organic compounds.

High molecular weight linear polymers of carbon monoxide with one or more olefinically unsaturated organic compounds (for the sake of brevity referred to as A) in which the monomer units occur in an alternating order and which therefore consist of units of the general formula —CO—(A')— wherein A' represents a monomer unit from a monomer A used, can be prepared by using catalyst compositions based upon

a) a palladium compound,

b) an anion of an acid with a pKa of less than 2, provided that the acid is not a hydrohalogenic acid, and

c) a bidentate ligand of the general formula $R^1R^2$—M—R—M—$R^3R^4$, wherein M represents phosphorus, arsenic or antimony, $R^1$, $R^2$, $R^3$ and $R^4$ represent hydrocarbyl groups which may or may not be substituted with polar groups and R represents a bivalent organic bridging group containing at least two carbon atoms in the bridge.

Thus far, the polymer preparation by means of the above-described catalyst compositions used to be carried out as a liquid phase polymerization in which the monomers were contacted with the catalyst composition in a liquid non-polymerizable diluent. Liquid phase polymerization is characterized in that the quantity of diluent used is such that during the polymerization the quantity by weight of diluent present as the liquid is larger than the quantity by weight of polymer formed.

The polymers' value with regard to their uses is higher according as their molecular weights are higher. The molecular weights of the polymers can be influenced by the temperature at which the polymerization is carried out, in that at otherwise similar reaction conditions a decrease of the reaction temperature will result in a rise in molecular weight. However, a decreased reaction temperature will be attended with two further effects. In the first place a decrease of the reaction temperature involves a decrease of the reaction rate, and further, a decrease of the reaction temperature will lead to a decrease of the polymer bulk density. In the present polymerization it is expedient that the reaction rate be high and that polymers with high bulk densities be formed. Generally, in the liquid phase polymerization a decrease of the reaction temperature needed to obtain only a moderate increase of the molecular weight will already give rise to a considerable drop both of the reaction rate and of the bulk density of the polymers.

The Applicant has carried out an investigation into the polymer preparation by using the above-described catalyst compositions. Surprisingly, the investigation has shown that these catalyst compositions exhibit a far more attractive performance if the polymerization is carried out as a gas phase polymerization, in which the monomers are contacted with the catalyst composition in the absence of a liquid non-polymerizable diluent. Comparison of the present catalyst compositions' performance in liquid phase and in gas phase polymerization shows that when for both polymerizations the temperature is lowered to achieve the same increase in molecular weight, this involves a considerably smaller loss of reaction rate and bulk density in the case of the gas phase polymerization. It has further been found that when by both polymerizations there are prepared polymers of the same molecular weights, the rate at which these are produced is higher in the case of the gas phase polymerization, while in addition the prepared polymers have higher bulk densities.

It is common practice in the preparation of the present polymers by means of liquid phase polymerization, to use a liquid non-polymerizable diluent in which the catalyst composition does but the polymers do not dissolve. During the polymerization the polymer is obtained in the form of a suspension in the diluent. After the required degree of polymerization has been achieved, the polymerization is usually terminated by cooling and releasing the pressure. The polymer is isolated from the suspension for instance by filtration or centrifugation. The pure diluent intended for a following polymer preparation is recovered from the remaining liquor, for instance by distillation.

In addition to the advantages with respect to reaction rate, molecular weight and bulk density mentioned hereinbefore which the gas phase polymerization offers in comparison with the liquid phase polymerization, the polymer preparation in the gas phase has the additional merit that the above-described filtration or centrifugation steps as well as the distillation step can be omitted. Since when carried out on a technical scale these separation and purification steps involve considerable cost it is considered to be a major advantage of the gas phase polymerization that in the execution of the polymerization in this manner they can be omitted.

The present patent application therefore relates to a process for the preparation of polymers, in which a mixture of carbon monoxide with one or more olefinically unsaturated organic compounds is polymerized by contacting the mixture with a catalyst composition based upon

a) a palladium compound,

b) an anion of an acid with a pKa of less than 2, provided that the acid is not a hydrohalogenic acid, and

c) a bidentate ligand of the general formula $R^1R^2$—M—R—M—$R^3R^4$, wherein M represents phosphorus, arsenic or antimony. $R^1$, $R^2$, $R^3$ and $R^4$ represent hydrocarbyl groups which may or may not be substituted with polar groups and R represents a bivalent organic bridging group containing at least two carbon atoms in the bridge,

in the absence of a liquid non-polymerizable diluent the polymerisation being carried out as a gas phase polymerization process.

In order to enhance the performance of the

catalyst compositions, the gas phase polymerization according to the invention is preferably carried out in the presence of a minor quantity of alcohol and/or hydrogen. Alcohols that are very suitable are in particular the lower alcohols such as methanol, ethanol, propanol, iso-propanol, butanol and iso-butanol. Special preference is given to the use of methanol. If the process according to the invention is carried out in the presence of an alcohol, the quantity of alcohol used should be chosen so small that during the polymerization the alcohol is present exclusively in the gaseous condition. The execution of the gas phase polymerization in the presence of a minor quantity of hydrogen presents an additional advantage in that polymers of an extremely high molecular weight can be prepared. As explained hereinbefore, a rise in polymer molecular weight can be achieved both in the liquid phase polymerization and in the gas phase polymerization by carrying out the polymerization at a lower temperature. As the reaction temperature used become lower, so does the reaction rate. The molecular weights that can be thus achieved are tied to certain maximum values, since finally a stage will be reached where the reaction rate drops to an unacceptably low level. Surprisingly, the investigation has shown that when the polymerization is carried out in the gas phase in the presence of a minor quantity of hydrogen, this enables polymers to be prepared at an acceptable reaction rate while attaining molecular weights which substantially exceed the afore-mentioned values maximally attainable in the absence of hydrogen in either the liquid phase or the gas phase polymerization.

There are several ways in which the catalyst composition can be fed to the monomer mixture to be polymerized during the gas phase polymerization. In the first place the catalyst composition can be introduced into the polymerization reactor as such, i.e. without a carrier material. If desired, the catalyst composition may be first dissolved or suspended in a liquid diluent, which is substantially removed after the solution or suspension has been introduced into the reactor, for instance by spraying. Examples of suitable diluents are alcohols, such as methanol, hydrocarbons, such as toluene, ketones, such as acetone, esters, such as methyl propionate and ethers, such as diethyl ether. Preference is given to the use of an alcohol as a diluent, in particular methanol. When an alcohol is used, the removal thereof is preferably carried out in such a way that a minor quantity remains behind in the catalyst composition. Preferably, the gas phase polymerization is carried out by using the catalyst composition supported on a carrier material. The catalyst composition can very suitably be deposited on the carrier material by contacting the carrier material with a solution or suspension of the catalyst composition in a liquid diluent, and then substantially removing the diluent. As diluents, the diluents mentioned hereinbefore may be used, preference again being given to alcohols and methanol in particular. When an alcohol is used as the diluent, the removal thereof is preferably carried out in such a way that a minor quantity remains behind in the catalyst composition supported on the carrier. The preferred carrier material is a porous carrier material. Eligible carrier materials for the catalyst compositions are both organic and inorganic carrier materials. Examples of suitable carrier materials are silica, alumina, talc, charcoal, cellulose, dextrose and dextran gel. Further carrier materials that can be used are polymers, such as polyethylene, polypropylene and polystyrene. When the gas phase polymerization is carried out by using the catalyst composition supported on a carrier material, this will lead to products in which the prepared carbon monoxide copolymer is present together with the carrier material used. Products of widely different properties and uses can be prepared depending on the nature and the quantities of the carrier material used. If desired, all or part of the carrier material can be removed from the product after the polymerization is completed by treating the product with a solvent in which the carrier material can be, but the prepared carbon monoxide copolymer cannot be dissolved.

In the gas phase polymerization according to the invention the preferred carrier material for the catalyst composition is a polymer of carbon monoxide with one or more olefinically unsaturated organic compounds and in particular such a polymer in which the units originating in carbon monoxide and the units originating in the olefinically unsaturated monomers alternate with one another. More specifically, preference is given to carbon monoxide copolymers prepared by using a catalyst composition based upon component a)—c). Both polymers prepared by the liquid phase polymerization and polymers prepared by the gas phase polymerization can be used for the purpose.

An investigation carried out earlier by the Applicant into the polymer preparation using the above-described catalyst compositions has shown that at least part of the catalyst remains behind in the polymer and cannot be removed therefrom by washing. Now it has been found that the catalyst present in these polymers can be used to prepare an additional amount of polymer by contacting the catalyst-containing polymers with the monomers in the absence of a liquid non-polymerizable diluent. The investigation has further shown that the activity of the catalyst present in the polymers is not lost upon storage. Polymers which had been stored for many months were at the end of this period of storage still suitable for use in the above-mentioned polymer preparation.

The catalyst-containing polymers described hereinbefore can be used in the gas phase polymerization per se, i.e. without additional deposition of catalyst composition. Preferably, an additional amount of the catalyst composition is emplaced on the catalyst-containing polymers, for instance by contacting the catalyst-containing

polymers with a solution or suspension of the catalyst composition in a liquid diluent and subsequently substantially removing the diluent. In the latter case the polymerization is catalyzed both by the catalyst composition deposited on the carrier polymer and by the catalyst composition which remained behind in the carrier polymer when the latter was prepared.

The palladium compound used as component a) in the catalyst compositions preferably is a palladium salt of a carboxylic acid and in particular palladium acetate. Examples of suitable acids with a pKa of less than 2 (determined in aqueous solution at 18°C) are sulphuric acid, perchloric acid, sulphonic acids, such as methanesulphonic acid, trifluoromethanesulphonic acid and para-toluenesulphonic acid and carboxylic acids, such as trichloroacetic acid, difluoroacetic acid and trifluoroacetic acid. Preference is given to para-toluenesulphonic acid.

In the catalyst compositions component b) is preferably present in a quantity of 0.5 to 200 and in particular of 1.0 to 10, equivalents per gram atom of palladium. Component b) may be incorporated in the catalyst compositions either in the form of an acid or in the form of a salt. Eligible salts are non-noble transition metal salts and main group metal salts. Examples of transition metals and salts of which are very suitable for use as component b) are the Group 4B metal zirconium, the Group 5B metal vanadium, the Group 6B metal chromium, the Group 8 metals iron and nickel, the Group 1B metal copper, the lanthanide cerium and the actinides thorium and uranium. If component b) is used in the catalyst compositions in the form of an acid or in the form of a non-noble transition metal salt, it is preferred also to include a quinone as a component d) in order to enhance the activity of the catalyst compositions. For this purpose 1,4-benzoquinones have been found to be very suitable.

Examples of main group metals the salts of which are very suitable for use as component b) are the Group 3A metals aluminium and gallium, the Group 4A metals tin and lead and the Group 5A metal antimony. Salts of Group 1A metals, such as lithium, potassium and sodium and salts of Group 2A metals, such as magnesium, are eligible for the present purpose as well, provided that an ether is also included in the catalyst compositions as a component d). When a salt of a metal belonging to the main groups 3A—5A is used as component b), it is preferred in order to enhance the activity of the catalyst compositions also to include an ether as a component d). Crown ethers have proven to be very suitable ethers.

If desired, components a) and b) can be used combined in a single compound. An example of such a compound is the complex

$$Pd(CH_3CN)_2(O_3S—C_6H_4—CH_3)_2,$$

which can be prepared by reaction of palladium chloride with the silver salt of para-toluenesulphonic acid in acetonitrile as the solvent.

In the bidentate ligand M is preferably phosphorus. The groups $R^1$, $R^2$, $R^3$ and $R^4$ present in the bidentate ligand preferably contain 6 to 14 carbon atoms. Special preference is given to bidentate ligands in which the groups $R^1$, $R^2$, $R^3$ and $R^4$ are phenyl groups or substituted phenyl groups. The bivalent organic bridging group R preferably contains three carbon atoms in the bridge. Examples of suitable bidentate ligands are

1,3-bis(di-p-tolylphosphine)propane,
1,3-bis(di-p-methoxyphosphine)propane,
1,3-bis(diphenylphosphine)propane, and
2-methyl-2-(methyldiphenylphosphine)-1,3-bis-(diphenylphosphine)propane.

Preference is given to the use of either one of the latter two bidentate ligands. The bidentate ligand is preferably used in a quantity of 0.1—5 and in particular 0.5—1.5 mol per mol of palladium compound.

Eligible olefinically unsaturated organic compounds that can be polymerized with carbon monoxide according to the invention are both compounds which consist exclusively of carbon and hydrogen and compounds which, in addition to carbon and hydrogen, contain one or more hetero-atoms. The polymerization according to the invention is preferably used for preparing polymers of carbon monoxide with one or more olefinically unsaturated hydrocarbons. Examples of suitable hydrocarbon monomers are ethene and other α-olefins, such as propene, butene-1, hexene-1 and octene-1 as well as styrene and alkyl-substituted styrenes such as p-methylstyrene and p-ethylstyrene. The polymerization according to the invention is particularly suitable for the preparation of copolymers of carbon monoxide with ethene and for the preparation of terpolymers of carbon monoxide with ethene and another olefinically unsaturated hydrocarbon, in particular propene.

The quantity of catalyst composition used in the preparation of the polymers may vary within wide ranges. Per mol of olefinically unsaturated compound to be polymerized, such a quantity of catalyst is preferably used as to contain $10^{-7}$—$10^{-3}$ and in particular $10^{-6}$—$10^{-4}$ gram atom of palladium.

The preparation of the polymers is preferably carried out at a temperature of 20—200°C and a pressure of 1—200 bar and in particular at a temperature of 30—150°C and a pressure of 20—100 bar. In the mixture to be polymerized, the preferred molar ratio of the olefinically unsaturated organic compounds relative to carbon monoxide is 10:1—1:5 and in particular 5:1—1:2. Reactors that have been found suitable for carrying out the polymerization are both mechanically stirred reactors and "fluidized bed" reactors.

The higher the molecular weight of the polymers, the higher will be in general the intricsic viscosity they exhibit. For the determination of the intrinsic viscosity of a polymer, four solutions are first of all prepared by dissolving the polymer in four different concentrations of 100°C in m-cresol. For each of these solutions, the viscosity is measured in a viscometer at 100°C relative to m-cresol at 100°C. If $T_o$ represents the outflow time of m-cresol and $T_p$ the outflow time of the polymer solution, the relative viscosity ($\eta_{rel}$) is obtained from $\eta_{rel}=T_o/T_p$. From $\eta_{rel}$ can be calculated the inherent viscosity ($\eta_{inh}$) according to the formula:

$$\eta_{inh}=\frac{\ln \eta_{rel}}{c}$$

where c represents the concentration of the polymer in grams per 100 ml solution. By plotting graphically the $\eta_{inh}$ found for each of the four polymer solutions against the corresponding concentration (c) and then by extrapolating to c=0, the intrinsic viscosity [η] in dl/g is found. Instead of "intrinsic viscosity", this patent application will henceforth use the term recommended by the International Union of Pure and Applied Chemistry, viz. "Limiting Viscosity Number" (LVN). The polymers generally have a LVN of between 0.2 and 5.0 dl/g. Preferred polymers have an LVN of between 0.3 and 4.5 dl/g and in particular an LVN of between 0.4 and 4.0 dl/g.

The invention will now be illustrated with the aid of the following examples.

Example 1

A carbon monoxide/ethene copolymer was prepared as follows. 125 ml of methanol was introduced into a mechanically stirred autoclave with a volume of 300 ml. After the contents of the autoclave has been brought to a temperature of 85°C, a 1:1 carbon monoxide/ethene mixture was introduced until a pressure of 55 bar was reached. A catalyst solution was then introduced into the autoclave, consisting of:

5.5 ml of methanol,

0.005 mmol of $Pd(CH_3CN)_2(O_3S—C_6H_4—CH_3)_2$, and

0.005 mmol of 2-methyl-2-(methyldiphenylphosphine)-1,3-bis(diphenylphosphine) propane.

During the polymerization, the pressure was maintained at 55 bar by introduction under pressure of a 1:1 carbon monoxide/ethene mixture. After 3 hours the polymerization was terminated by cooling the reaction mixture down to room temperature and releasing the pressure. The copolymer was filtered off, washed with methanol and dried at 50°C for 16 hours. The product was 10 g of copolymer having an LVN of 0.4 dl/g and a bulk density of 0.17 g/ml. The polymerization rate was 6600 g of copolymer/g of palladium/hour.

Example 2

A carbon monoxide/ethene copolymer was prepared as follows. The carbon monoxide/ethene copolymer prepared according to Example 1 (10 g) was introduced into a mechanically stirred autoclave of 300 ml content after a 3 months' period of storage. Air present in the autoclave was expelled by pressurizing the autoclave with nitrogen until a pressure of 50 bar was reached and then releasing the pressure, which procedure was repeated two more times. A 1:1 carbon monoxide/ethene mixture was introduced into the autoclave under pressure. At the same time the contents of the autoclave were heated until a temperature of 85°C and a pressure of 55 bar were reached. During the polymerization the pressure was maintained at 55 bar by introduction of a 1:1 carbon monoxide/ethene mixture. After 42 hours the polymerization was terminated by cooling to room temperature and releasing the pressure. 30 g of copolymer was obtained.

Example 3

A carbon monoxide/ethene copolymer was prepared substantially in the same way as the copolymer of Example 1, except for the following differences

a) the autoclave had a capacity of 1000 ml and contained 500 ml methanol,

b) the catalyst solution included 7 ml of methanol,

c) the reaction pressure was 60 bar and the reaction temperature 65°C, and

d) the polymerization was terminated after 23.3 hours.

The product was 35 g of copolymer having an LVN of 1.0 dl/g and a bulk density of 0.10 g/ml.

The polymerization rate was 2900 g of copolymer/g of palladium/hour.

The copolymer obtained was divided into 5 portions of 7 g each. Each one of these portions was used as a carrier for the preparation of a catalyst to be used in a gas phase experiment (Examples 4, 5, 7, 8 and 9).

Example 4

A carbon monoxide/ethene copolymer was prepared as follows. A catalyst was prepared by allowing a catalyst solution comprising

2 ml of methanol,

0.0095 mmol of palladium acetate,

0.0095 mmol of 1,3-bis(diphenylphosphine)propane, and

0.0190 mmol of para-toluenesulphonic acid

to be absorbed onto 7 g of the copolymers prepared according to Example 3. The catalyst thus prepared was introduced into a mechanically stirred autoclave with a volume of 300 ml. Air present in the autoclave was expelled by pressurizing the autoclave with nitrogen until a pressure of 50 bar was reached and then releasing the pressure, which procedure was repeated two more times. A 1:1 carbon monoxide/ethane mixture was introduced into the autoclave under pressure. At the same time the contents of the autoclave were heated until a temperature of 85°C and a pressure of 55 bar were reached. During the polymerization the pressure was maintained at 55 bar by introducing a 1:1 carbon monoxide/ethene mixture. After 21 hours the polymerization was terminated by cooling to room temperature and releasing the pressure. The copolymer was dried

at 50°C for 16 hours. A copolymer with an LVN of 1.4 dl/g and a bulk density of 0.26 g/ml was obtained. The polymerization rate was 3200 g of copolymer/g of palladium/hour.

Example 5

A carbon monoxide/ethene copolymer was prepared substantially in the same way as the copolymer of Example 4, except for the following differences

a) the catalyst solution comprised
2 ml of methanol,
0.02 mmol of palladium acetate,
0.02 mmol of 1,3-bis(diphenylphosphine)propane, and
0.04 mmol of para-toluenesulphonic acid,
b) the reaction temperature was 65°C, and
c) the polymerization was terminated after 3 hours.

A copolymer with an LVN of 2.4 dl/g and a bulk density of 0.24 g/ml was obtained. The polymerization rate was 3000 g of copolymer/g of palladium/hour.

Example 6

A mixture of a carbon monoxide/ethene copolymer and β-cyclodextrine was prepared substantially in the same way as the carbon monoxide/ethene copolymer of Example 4, except for the following differences

a) a catalyst was used which had been prepared by allowing a catalyst solution comprising
2 ml of methanol,
0.019 mmol of palladium acetate,
0.019 mmol of 1,3-bis(diphehylphosphine)propane and
0.038 mmol of para-toluenesulphonic acid
to be absorbed onto 5 g of β-cyclodextrine (cycloheptaamylose), and
b) the polymerization was terminated after 5 hours.

A mixture of a carbon monoxide/ethene copolymer and β-cyclodextrine was obtained, which mixture had an LVN of 0.6 dl/g and a bulk density of 0.16 g/ml. The polymerization rate of the carbon monoxide/ethene copolymer was 1100 g of copolymer/g of palladium/hour.

Example 7

A mixture of a carbon monoxide/ethene/propene terpolymer and a carbon monoxide/ethene copolymer was prepared in substantially the same way as the carbon monoxide/ethene copolymer of Example 4, except for the following differences

a) the catalyst solution comprised
2 ml of methanol,
0.05 mmol of $Pd(CH_3CN)_2(O_3S—C_6H_4—CH_3)_2$, and
0.05 mmol of 2-methyl-2-(methyldiphenylphosphine)-1,3-bis(diphenylphosphine)propane.
b) 20 ml of liquid propene was introduced into the autoclave in addition,
c) during the polymerization liquid propene was fed into the autoclave at a rate of 0.5 ml/h, and
d) the polymerization was terminated after 46 hours.

A mixture of a carbon monoxide/ethene/propene terpolymer and a carbon monoxide/ethene copolymer was obtained, which mixture had a melting point of 206°C, an LVN of 0.4 dl/g and a bulk density of 0.4 g/ml. The polymerization rate of the carbon monoxide/ethene/propene terpolymer was 400 g of terpolymer/g of palladium/hour.

Example 8

A carbon monoxide/ethene copolymer was prepared as follows. A catalyst was prepared by allowing a catalyst solution comprising
2 ml of acetone,
0.0047 mmol of palladium acetate,
0.0047 mmol of 1,3-bis(diphenylphosphine)propane, and
0.0095 mmol of para-toluenesulphonic acid
to be absorbed onto 7 g of the copolymer prepared according to Example 3. The catalyst thus prepared was introduced into a mechanically stirred autoclave with a volume of 100 ml. Air present in the autoclave was expelled by pressurizing the autoclave with nitrogen until a pressure of 50 bar was reached and then releasing the pressure, which procedure was repeated once. A 1:1 carbon monoxide/ethene mixture was introduced into the autoclave until a pressure of 20 bar was reached, followed by hydrogen until a total pressure of 25 bar was reached. Subsequently the contents of the autoclave were brought to 85°C and a 1:1 carbon monoxide/ethene mixture was introduced with pressure until a pressure of 55 bar was reached. During the polymerization the pressure was maintained at 55 bar by the introduction of a 1:1 carbon monoxide/ethene mixture. After 11.6 hours the polymerization was terminated by cooling to room temperature and releasing the pressure. The copolymer was dried at 50°C for 16 hours. A copolymer with an LVN of 2.1 dl/g and a bulk density of 0.2 g/ml was obtained. The polymerization rate was 1600 g of copolymer/g of palladium/hour.

Example 9

A carbon monoxide/ethene copolymer was prepared in substantially the same way as the copolymer of Example 8, except for the following differences

a) the reaction temperature was 65°C, and
b) the polymerization was terminated after 66.2 hours.

A copolymer with an LVN of 10.9 dl/g and a bulk density of 0.17 g/ml was obtained. The polymerization rate was 600 g of copolymer/g of palladium/hour.

Example 10

A carbon monoxide/ethene/propene terpolymer was prepared as follows. A mechanically stirred autoclave with a volume of 3.785 l was charged with 1.41 kg of methanol and 227 g of propene. After the contents of the autoclave had been brought at 45°C, a 1:1 carbon monoxide/

ethene mixture was introduced under pressure until a pressure of 45 bar was reached. Subsequently a catalyst solution comprising

4.7 ml of methanol,

0.0475 mmol of palladium acetate,

0.0475 mmol of 1,3-bis(diphenylphosphine)propane, and

0.95 mmol of trifluoroacetic acid, was fed into the autoclave.

During the polymerization the pressure was maintained at 45 bar by introducing a 1:1 carbon monoxide/ethene mixture. After 136 hours the polymerization was terminated by cooling the reaction mixture down to room temperature and releasing the pressure. The terpolymer was filtered off, washed with methanol and dried under nitrogen at 50°C. A terpolymer with an LVN of 1.3 dl/g, a bulk density of 0.37 g/ml and a melting point of 206°C was obtained. The polymerization rate was 260 g of terpolymer/g of palladium/hour.

Example 11

A mixture of a carbon monoxide/ethene copolymer and a carbon monoxide/ethene/propene terpolymer was prepared as follows. A catalyst was prepared by impregnation of 10 g of the terpolymer prepared according to Example 10 with a catalyst solution comprising

20 ml of acetone,

0.0377 mmol of palladium acetate,

0.0412 mmol of 2-methyl-2-(methyldiphenylphosphine)-1,3-bis (diphenylphosphine)propane, and

0.07552 mmol para-toluenesulphonic acid.

After completion of the impregnation the catalyst was dried under nitrogen at 60°C. The catalyst thus prepared was introduced into a "fluidized bed" reactor 175 cm in length and 2 cm in diameter. Any air present in the reactor was expelled by means of nitrogen. After the reactor contents had been brought to 85°C, a 1:1 carbon monoxide/ethene mixture and hydrogen were introduced with pressure until total pressure of 50 bar (carbon monoxide 22 bar, ethene 22 bar and hydrogen 6 bar) was reached with the aid of a circulating gas compressor connected to the reactor a linear gas velocity of 4.2 cm/s was maintained in the reactor during the polymerization. After 5 hours the polymerization was terminated by cooling to room temperature and releasing the pressure. A mixture of a carbon monoxide/ethene copolymer and a carbon monoxide/ethene/propene terpolymer was obtained which had an LVN of 0.96 dl/g and a bulk density of 0.39 g/ml. The polymerization rate of the carbon monoxide/ethene copolymer was 1700 g of copolymer/g of palladium/hour.

Example 12

A mixture of a carbon monoxide/ethene copolymer and a carbon monoxide/ethene/propene terpolymer was prepared in substantially the same way as the mixture of Example 11, except for the following differences

a) 10 ml of methanol was introduced after the air had been expelled from the reactor, and

b) after the contents of the reactor had been brought to 85°C, a 1:1 carbon monoxide/ethene mixture was introduced until a total pressure of 50 bar was reached.

A mixture of a carbon monoxide/ethene copolymer and a carbon monoxide/ethene/propene terpolymer was obtained which had an LVN of 1,11 dl/g and a bulk density of 0.40 g/dl. The polymerization rate of the carbon monoxide/ethene copolymer was 770 g of copolymer/g of palladium/hour.

Of the examples described hereinbefore, Examples 2, 4—9, 11 and 12 are examples according to the invention. In these examples the polymerizations were carried out as gas phase polymerizations. Examples 1, 3 and 10, in which the polymerizations were carried out as liquid phase polymerizations, fall outside the scope of the invention; they have been included in the patent application for comparison.

In calculating the polymerization rates given in Examples 4, 5, 7—9, 11 and 12 it was assumed that the polymeric catalyst carriers contained all the palladium that had been used in their preparation.

Comparison of the results of Examples 1 and 3 shows that in the liquid phase polymerization a decrease of the reaction temperature of from 85 to 65°C results in an increase of the LVN of from 0.4 to 1.0 dl/g ($\Delta$=0.6 dl/g) combined with a fall in bulk density of from 0.17 to 0.10 g/ml ($\Delta$=0.07 g/ml) as well as a fall in polymerization rate of from 6600 to 2900 g/g/h ($\Delta$=3700 g/g/ml).

Comparison of the results of Examples 4 and 5 shows that in the gas phase polymerization a similar decrease of the reaction temperature of from 85 to 65°C results in an increase of the LVN of from 1.4 to 2.4 dl/g ($\Delta$=1.0 dl/g) combined with a fall in bulk density of from 0.26 to 0.24 g/ml ($\Delta$=0.02 g/ml) and a fall in polymerization rate of from 3200 to 3000 g/g/h ($\Delta$=200 g/g/h).

Comparison of the results of Examples 4 and 8, both carried out at 85°C in the gas phase, shows that the polymerization when carried out in the presence of a minor quantity of hydrogen (Example 8) results in polymers with higher LVN's. The same phenomenon is seen upon comparison of the results of Examples 5 and 9, both carried out at 65°C in the gas phase, with Example 9 being executed in the presence of hydrogen. In Example 9, an extremely high LVN, of 10.9 dl/g, was achieved owing to the low reaction temperature.

The great influence exerted on the LVN by the presence of hydrogen in the gas phase polymerization is clearly demonstrated by a comparison of the results of Examples 8 and 9 with those of Examples 4 and 5. In both cases a decrease of the reaction temperature of from 85°C to 65°C leads to an increased LVN. Whereas in Examples 4 and 5, which were carried out in the absence of hydrogen, the LVN increases from 1.4 to 2.4 dl/g ($\Delta$=1.0 dl/g), the LVN is seen to increase from 2.1

to 10.9 dl/g (Δ=8.8 dl/g) in Examples 8 and 9, which were carried out in the presence of hydrogen.

With the aid of $^{13}C$-NMR analysis it was established that the carbon monoxide/ethene copolymers prepared according to Examples 1—6, 8, 9, 11 and 12 had a linear alternating structure and therefore consisted of units of the formula $—CO—(C_2H_4)—$. The copolymers had a melting point of 257°C.

It was also established with the aid of $^{13}C$-NMR analysis that the carbon monoxide/ethene/propene terpolymers prepared according to Examples 7 and 10 had a linear structure, consisting of units of the formula $—CO—(C_2H_4)—$ and units of the formula $—CO—(C_3H_8)—$, which units were distributed randomly within the terpolymers.

## Claims

1. Process for the preparation of polymers characterized in that a mixture of carbon monoxide with one or more olefinically unsaturated organic compounds is polymerized by contacting the mixture with a catalyst composition based upon

a) a palladium compound,

b) an anion of an acid with a pKa of less than 2, provided that the acid is not a hydrohalogenic acid, and

c) a bidentate ligand of the general formula $R^1R^2—M—R—M—R^3R^4$, wherein M represents phosphorus, arsenic or antimony, $R^1$, $R^2$, $R^3$ and $R^4$ represent hydrocarbyl groups which may or may not be substituted with polar groups and R represents a bivalent organic bridging group which contains at least two carbon atoms in the bridge

in the absence of a liquid non-polymerizable diluent the polymerization being carried out as a gas phase polymerization process.

2. Process as claimed in Claim 1, characterized in that the polymerization is carried out in the presence of an alcohol, the quantity of the latter being chosen so small that during the polymerization it is present only in the gaseous condition.

3. Process as claimed in Claim 2, characterized in that the alcohol used is methanol.

4. Process as claimed in one or more of Claims 1—3, characterized in that the polymerization is carried out in the presence of a small amount of hydrogen.

5. Process as claimed in one or more of Claims 1—4, characterized in that the catalyst composition is deposited on a carrier material.

6. Process as claimed in Claim 5, characterized in that the carrier material is a polymer of carbon monoxide with one or more olefinically unsaturated compounds.

7. Process as claimed in Claim 6, characterized in that in the polymeric carrier material the units originating in the carbon monoxide and the units originating in the olefinically unsaturated monomers occur in an alternating order.

8. Process as claimed in Claim 7, characterized in that the carrier material is prepared by using a catalyst composition based upon the components a)—c) as stated in Claim 1.

9. Process as claimed in Claim 8, characterized in that, in addition to a quantity of catalyst composition which remained behind in the carrier material when the latter was prepared, the carrier material contains an additional amount of catalyst composition which has been deposited thereon, for instance, by contacting the catalyst-containing carrier material with a solution or suspension of the catalyst composition in a liquid diluent.

10. Process as claimed in one or more of Claims 1—9, characterized in that a catalyst composition is used which is based upon a palladium salt of a carboxylic acid, such as palladium acetate, as component a).

11. Process as claimed in one or more of Claims 1—10, characterized in that a catalyst composition is used which is based upon an anion of a sulphonic acid, such as p-toluenesulphonic acid, as component b).

12. Process as claimed in one or more of Claims 1—11, characterized in that a catalyst composition is used in which component b) is present in a quantity of from 0.5 to 200 equivalents per gram atom of palladium.

13. Process as claimed in Claim 12, characterized in that a catalyst composition is used in which component b) is present in a quantity of from 1.0 to 100 equivalents per gram atom of palladium.

14. Process as claimed in one or more of Claims 1—13, characterized in that a catalyst composition is used in which component b) has been incorporated in the form of an acid.

15. Process as claimed in one or more of Claims 1—13, characterized in that a catalyst composition is used in which component b) has been incorporated in the form of a non-noble transition metal salt.

16. Process as claimed in Claim 15, characterized in that a catalyst composition is used in which component b) has been incorporated in the form of a salt chosen from the group formed by zirconium, vanadium, chromium, iron, nickel, copper, cerium, thorium and uranium salts.

17. Process as claimed in one or more of Claims 14—16, characterized in that a catalyst composition is used which in addition includes a quinone as a component d).

18. Process as claimed in Claim 17, characterized in that a catalyst composition is used which includes a 1,4-benzoquinone as component d).

19. Process as claimed in one or more of Claims 1—13, characterized in that a catalyst composition is used in which component b) has been incorporated in the form of a main group metal salt and which in addition optionally includes an ether as component d), on the understanding that the presence of an ether is compulsory when the composition contains an alkali or alkaline earth metal salt as component b).

20. Process as claimed in Claim 19, characterized in that a catalyst composition is used in which component b) has been incorporated in the form of a salt chosen from the group formed by aluminium, gallium, tin, lead, antimony, lithium, potassium, sodium and magnesium salts.

**Patentansprüche**

1. Verfahren zur Herstellung von Polymeren, dadurch gekennzeichnet, daß ein Gemisch aus Kohlenmonoxid mit einem oder mit mehreren olefinisch ungesättigten organischen Verbindungen durch In-Berührung-Bringen des Gemisches mit einer Katalysatorzusammensetzung auf der Basis von

a) einer Palladiumverbindung,

b) einem Anion einer Säure mit einem pKa-Wert von kleiner als 2, mit der Maßgabe, daß die Säure nicht eine Halogenwasserstoffsäure ist, und

c) einem Bidentatliganden der allgemeinen Formel $R^1R^2$—M—R—M—$R^3R^4$, worin M für Phosphor, Arsen oder Antimon steht, $R^1$, $R^2$, $R^3$ und $R^4$ Kohlenwasserstoffgruppen bedeuten, die mit polaren Gruppen substituiert oder unsubstituiert sein können und R eine zweiwertige organische Brückengruppe darstellt, die wenigstens zwei Kohlenstoffatome in der Brücke enthält, in Abwesenheit eines flüssigen, nicht polymerisierbaren Verdünnungsmittels polymerisiert wird, wobei die Polymerisation als ein Gasphasenpolymerisationsverfahren ausgeführt wird.

2. Verfahren nach Anspruch 1, dadurch gekennzeichnet, daß die Polymerisation in Anwesenheit eines Alkohols vorgenommen wird, dessen Menge so gering gewählt wird, daß der Alkohol während der Polymerisation ausschließlich in gasförmigen Zustand vorliegt.

3. Verfahren nach Anspruch 2, dadurch gekennzeichnet, daß der verwendete Alkohol Methanol ist.

4. Verfahren nach einem oder mehreren der Ansprüche 1 bis 3, dadurch gekennzeichnet, daß die Polymerisation in Anwesenheit einer geringen Menge Wasserstoff ausgeführt wird.

5. Verfahren nach einem oder mehreren der Ansprüche 1 bis 4, dadurch gekennzeichnet, daß die Katalysatorzusammensetzung auf einem Trägermaterial aufgebracht ist.

6. Verfahren nach Anspruch 5, dadurch gekennzeichnet, daß das Trägermaterial ein Polymer von Kohlenmonoxid mit einem oder mit mehreren olefinisch ungesättigten Verbindungen ist.

7. Verfahren nach Anspruch 6, dadurch gekennzeichnet, daß in dem polymeren Trägermaterial die von Kohlenmonoxid abstammenden Einheiten und die von den olefinisch ungesättigten Monomeren abstammenden Einheiten in alternierender Reihenfolge vorliegen.

8. Verfahren nach Anspruch 7, dadurch gekennzeichnet, daß das Trägermaterial durch Verwendung einer Katalysatorzusammensetzung auf der Basis der Komponenten a) bis c), wie in Anspruch 1 angegeben, hergestellt wird.

9. Verfahren nach Anspruch 8, dadurch gekennzeichnet, daß zusätzlich zu einer Menge einer Katalysatorzusammensetzung, die im Trägermaterial bei dessen Herstellung verblieben ist, das Trägermaterial eine zusätzliche Menge an Katalysatorzusammensetzung enthält, die darauf abgelagert worden ist, beispielsweise durch In-Berührung-Bringen des katalysatorhaltigen Trägermaterials mit einer Lösung oder Suspension der Katalysatorzusammensetzung in einem flüssigen Verdünnungsmittel.

10. Verfahren nach einem oder mehreren der Ansprüche 1 bis 9, dadurch gekennzeichnet, daß eine Katalysatorzusammensetzung verwendet wird, die auf einem Palladiumsalz einer Carbonsäure, wie Palladiumacetat, als Komponente a) beruht.

11. Verfahren nach einem oder mehreren der Ansprüche 1 bis 10, dadurch gekennzeichnet, daß eine Katalysatorzusammensetzung verwendet wird, die auf einem Anion einer Sulfonsäure, wie p-Toluolsulfonsäure, als Komponente b) beruht.

12. Verfahren nach einem oder mehreren der Ansprüche 1 bis 11, dadurch gekennzeichnet, daß eine Katalysatorzusammensetzung verwendet wird, worin die Komponente b) in einer Menge von 0,5 bis 200 Äquivalenten je Grammatom Palladium vorliegt.

13. Verfahren nach Anspruch 12, dadurch gekennzeichnet, daß eine Katalysatorzusammensetzung verwendet wird, worin die Komponente b) in einer Menge von 1,0 bis 100 Äquivalenten je Grammatom Palladium vorliegt.

14. Verfahren nach einem oder mehreren der Ansprüche 1 bis 13, dadurch gekennzeichnet, daß eine Katalysatorzusammensetzung verwendet wird, worin die Komponente b) in Form einer Säure einverleibt worden ist.

15. Verfahren nach einem oder mehreren der Ansprüche 1 bis 13, dadurch gekennzeichnet, daß eine Katalysatorzusammensetzung verwendet wird, worin die Komponente b) in Form eines unedlen Übergangsmetallsalzes einverleibt worden ist.

16. Verfahren nach Anspruch 15, dadurch gekennzeichnet, daß eine Katalysatorzusammensetzung verwendet wird, worin die Komponente b) in der Form eines Salzes, ausgewählt aus der aus Zirkon-, Vanadium-, Chrom-, Eisen-, Nickel-, Kupfer-, Cer-, Thorium- und Uransalzen gebildeten Gruppe, einverleibt worden ist.

17. Verfahren nach einem oder mehreren der Ansprüche 14 bis 16, dadurch gekennzeichnet, daß eine Katalysatorzusammensetzung verwendet wird, die zusätzlich ein Chinon als eine Komponente d) enthält.

18. Verfahren nach Anspruch 17, dadurch gekennzeichnet, daß eine Katalysatorzusammensetzung verwendet wird, welche ein 1,4-Benzochinon als Komponente d) enthält.

19. Verfahren nach einem oder mehreren der Ansprüche 1 bis 13, dadurch gekennzeichnet, daß eine Katalysatorzusammensetzung verwendet wird, worin die Komponente b) in Form eines Hauptgruppensalzes einverleibt worden ist und welche Zusammensetzung zusätzlich gegebenenfalls einen Ether als Komponente d) enthält, mit der Maßgabe, daß die Anwesenheit eines Ethers zwingend ist, wenn die Zusammensetzung ein Alkali- oder Erdalkalimetallsalz als Komponente b) enthält.

20. Verfahren nach Anspruch 19, dadurch gekennzeichnet, daß eine Katalysatorzusammensetzung verwendet wird, worin die Komponente b) in Form eines aus der aus Aluminium-, Gallium-, Zinn-, Blei-, Antimon-, Lithium-, Kalium-, Natrium- und Magnesiumsalzen bestehenden Gruppe ausgewählten Salzes einverleibt worden ist.

**Revendications**

1. Procédé pour la préparation de polymères, caractérisé en ce que l'on polymérise un mélange de monoxyde de carbone avec un ou plus d'un composé organique oléfiniquement insaturé en mettant en contact le mélange avec une composition catalytique à base de:

a) un composé de palladium;

b) un anion d'un acide présentant un pKa inférieur à 2, et sous la condition que l'acide n'est pas un acide hydrohalogéné; et

c) un ligand bidenté de formule générale $R^1R^2$—M—R—M—$R^3R^4$, dans laquelle M représente du phosphore, de l'arsenic ou de l'antimoine; $R^1$, $R^2$, $R^3$ et $R^4$ représentent des groupes hydrocarbyles qui peuvent ou ne peuvent pas être substitués par des groupes polaires et R représente un groupe de pontage bivalent organique, renfermant au moins 2 atomes de carbone sur le pontage;

en l'absence d'un diluant liquide non polymérisable, la polymérisation étant réalisée sous la forme d'un procédé de polymérisation en phase gazeuse.

2. Procédé tel que revendiqué dans la revendication 1, caractérisé en ce que la polymérisation est mise en oeuvre en présence d'un alcool, la quantité de ce dernier étant choisie si faible que pendant la polymérisation, il est uniquement présent à l'état gazeux.

3. Procédé tel que revendiqué dans la revendication 1, caractérisé en ce que l'alcool utilisé est le méthanol.

4. Procédé tel que revendiqué dans une ou plus d'une des revendications 1 à 3, caractérisé en ce que la polymérisation est mise en oeuvre en présence d'une petite quantité d'hydrogène.

5. Procédé tel que revendiqué dans une ou plus d'une des revendications 1 à 4, caractérisé en ce que la composition de catalyseur est déposée sur un matériau support.

6. Procédé tel que revendiqué dans la revendication 5, caractérisé en ce que le matériau support est un polymère de monoxyde de carbone avec un ou plus d'un composé oléfiniquement insaturé.

7. Procédé tel que revendiqué dans la revendication 6, caractérisé en ce que, dans le matériau polymère support, les motifs présents à l'origine dans le monoxyde de carbone et les motifs présents à l'origine dans le monomère oléfiniquement insaturé se trouvent dans un ordre alterné.

8. Procédé tel que revendiqué à la revendication 7, caractérisé en ce que le matériau support est préparé en utilisant une composition de catalyseur basée sur les composants a) à c) tels que spécifiés dans la revendication 1.

9. Procédé tel que revendiqué à la revendication 8, caractérisé en ce que, outre une quantité de composition catalytique qui reste à l'arrière dans le matériau support lorsque ce dernier est préparé, le matériau support contient une quantité supplémentaire de composition catalytique qui a été déposée, par exemple en mettant en contact le matériau-support renfermant le catalyseur à l'aide d'une solution ou d'une suspension de composition de catalyseur dans un diluant liquide.

10. Procédé tel que revendiqué dans une ou plus d'une des revendications 1 à 9, caractérisé en ce que l'on utilise une composition de catalyseur qui est basée sur un sel de palladium d'un acide carboxylique, par exemple l'acétate de palladium, comme composant a).

11. Procédé tel que revendiqué dans une ou plus d'une des revendications 1 à 10, caractérisé en ce l'on utilise une composition catalytique qui est basée sur un anion d'un acide sulfonique, par exemple un acide p-toluène sulfonique, comme composant b).

12. Procédé tel que revendiqué dans une ou plus d'une des revendications 1 à 11, caractérisé en ce l'on utilise une composition catalytique dans laquelle le composant b) est présent en une quantité de 0,5 à 200 équivalents par atome/gramme de palladium.

13. Procédé tel que revendiqué dans une ou plus d'une des revendications 1 à 12, caractérisé en ce l'on utilise une composition de catalyseur dans laquelle le composant b) est présent en une quantité de 1,0 à 100 équivalents par atome/gramme de palladium.

14. Procédé tel que revendiqué dans une ou plus d'une des revendications 1 à 13, caractérisé en ce l'on utilise une composition de catalyseur dans laquelle le composant b) a été incorporé sous la forme d'un acide.

15. Procédé tel que revendiqué dans une ou plus d'une des revendications 1 à 13, caractérisé en ce l'on utilise une composition de catalyseur dans laquelle le composant b) a été incorporé sous la forme d'un sel de métal de transition non noble.

16. Procédé tel que revendiqué dans la revendication 15, caractérisé en ce l'on utilise une composition de catalyseur dans laquelle le composant b) a été incorporé sous la forme d'un sel choisi dans le groupe constitué par les sels de zirconium, de vanadium, de chrome, de fer, de nickel, de cuivre, de cérium, de thorium et d'uranium.

17. Procédé tel que revendiqué dans l'une ou plus d'une des revendications 14 à 16, caractérisé en ce l'on utilise une composition de catalyseur qui renferme en outre une quinone comme composant d).

18. Procédé tel que revendiqué dans la revendication 17, caractérisé en ce l'on utilise une composition catalytique qui renferme une 1,4-benzoquinone comme composant d).

19. Procédé tel que revendiqué dans l'une ou plus d'une des revendications 1 à 13, caractérisé en ce l'on utilise une composition catalytique dans laquelle le composant b) a été incorporé sous la forme d'un sel métallique d'un groupe principal et qui en outre renferme facultativement un éther comme composant d), sous la condition que la présence d'un éther est obligatoire lorsque la composition renferme un sel alcalin ou alcalino-terreux comme composant b).

20. Procédé tel que revendiqué dans la revendication 19, caractérisé en ce l'on utilise une composition catalytique dans laquelle le composant b) a été incorporé sous la forme d'un sel choisi dans le groupe formé par les sels d'aluminium, de gallium, d'étain, de plomb, d'antimoine, de lithium, de potassium, de sodium et de magnésium.